# EUROPEAN PATENT SPECIFICATION

(11) **EP 3 196 563 B1**
(45) Date of publication and mention of the grant of the patent: **09.12.2020**
(21) Application number: 15851930.6
(22) Date of filing: 22.01.2015
(51) Int. Cl.: F25B 49/02, G05B 23/02, F24F 11/30, F24F 11/62, G05B 19/042

(54) **CONTROL DEVICE FOR AIR CONDITIONING SYSTEM, AIR CONDITIONING SYSTEM, AND METHOD FOR DETERMINING ANOMALY OF AIR CONDITIONING SYSTEM**
STEUERUNGSVORRICHTUNG FÜR KLIMAANLAGE, KLIMAANLAGE UND VERFAHREN ZUR BESTIMMUNG VON ANOMALIEN EINER KLIMAANLAGE
DISPOSITIF DE COMMANDE POUR SYSTÈME DE CONDITIONNEMENT DE L'AIR, SYSTÈME DE CONDITIONNEMENT DE L'AIR, ET PROCÉDÉ DE DÉTERMINATION D'ANOMALIE DE SYSTÈME DE CONDITIONNEMENT DE L'AIR

(30) Priority: 24.10.2014 JP 2014217461
(43) Date of publication of application: 26.07.2017
(73) Proprietor: Mitsubishi Heavy Industries, Ltd., Tokyo 108-8215 (JP)
(72) Inventor: ENYA, Atsushi, Tokyo 108-8215 (JP); ITO, Takahide, Tokyo 108-8215 (JP); MATSUO, Minoru, Tokyo 108-8215 (JP)
(74) Representative: Cabinet Beau de Loménie
(86) International application number: PCT/JP2015/051666
(87) International publication number: WO 2016/063550

(56) References cited:
- EP-A1- 0 706 015
- WO-A1-2010/041386
- JP-A- 2001 021 192
- JP-A- 2002 115 891
- JP-A- 2002 349 940
- JP-A- 2005 207 644
- JP-A- 2005 309 724
- JP-A- 2008 249 234
- JP-A- 2010 121 810
- JP-A- 2012 127 603
- KR-B1- 100 677 282
- US-A1- 2006 086 103

## Description

### Technical Field

The present invention relates to a control device for an air conditioning system, an air conditioning system, and a method for determining an anomaly of an air conditioning system.

### Background Art

Makers acquire operating data of an air conditioning system through remote monitoring, and perform proposal for energy saving to customers, determination of the presence or absence of a need for maintenance, and the like, for example, in related-art air conditioning systems, as part of maintenance.

In the related-art air conditioning systems that control an outdoor unit and an indoor unit using different control devices, respectively, the outdoor unit and the indoor unit are operated by different control programs. Therefore, it is difficult to accurately ascertain an operating state of an air conditioning system.

Thus, NPL 1 discloses an air-conditioning remote monitoring system in which a local server installed within a customer's building periodically transmits operating data of an air conditioner to an air-conditioning remote monitoring center server through the Internet, and the operating data that the center server has received are displayed on a monitoring screen of an air-conditioning remote monitoring center. In this air-conditioning remote monitoring system, main data (pressure value, refrigerant temperature, the rotational speed of a fan, the operation time of a compressor, the rotational speed of the compressor, the number of times of starting and stopping of the compressor, and the like) of the air conditioner are transmitted at regular intervals to the center server.

Then, in a case where an anomaly has occurred, a malfunction site showing the anomaly is specified on the basis of the operating data transmitted to the center server, and a maker carries out a contact with the service center and a request for repair.

### Citation List

### Non-Patent Literature

NPL 1: TOSHIBA REVIEW Vol. 60, No.6 (2005), Pages.52 to 55

WO2010/041386 discloses an air conditioning device remote control system and remote control method.

### Summary of Invention

### Technical Problem

However, in an area where external network environment, such as the Internet, is insufficient, it is difficult to install the air-conditioning remote monitoring center server. Additionally, high costs are required also for the installation of the air-conditioning remote monitoring center server.

Moreover, if the indoor unit and the outdoor unit manufactured by different makers are used for the air conditioning system, it is necessary to determine whether or not machinery (also referred to as functional components) installed in these units is operating correctly as the air conditioning system. Unless this determination is performed, the cause of an anomaly of the air conditioning system cannot be made clear, and a maker who has the responsibility for the anomaly cannot be clarified.

The invention has been made in view of such circumstances, and an object thereof is to provide a control device for an air conditioning system, an air conditioning system, and a method for determining an anomaly of an air conditioning system that can simply and accurately ascertain an operating state of the air conditioning system more.

### Solution to Problem

In order to solve the above problem, a control device for an air conditioning system, an air conditioning system, and a method for determining an anomaly of an air conditioning system in the invention adopts the following means.

A control device for an air conditioning system related to a first aspect of the invention is a control device for an air conditioning system, defined in claim 1, including one or a plurality of outdoor units and one or a plurality of indoor units. The control device includes an outdoor-unit control part capable of communication with the outdoor unit through a communication medium, the outdoor-unit control part acquiring, through the communication medium, information about machinery installed in the outdoor unit and outputting a control command to the machinery installed in the outdoor unit; an indoor-unit control part capable of communication with the indoor unit through the communication medium, the indoor-unit control part acquiring, through the communication medium, information about machinery installed in the indoor unit and outputting a control command to the machinery installed in the indoor unit; storage means for storing an operating state of the air conditioning system for each load state of the air conditioning system; and anomaly determination means for determining the presence or absence of an anomaly in the machinery by comparing a present operating state and a past operating state associated with an equivalent load state.

In the control device for an air conditioning system related to this configuration, the outdoor-unit control part that outputs the control command to the machinery installed in the outdoor unit, and the indoor-unit control part that outputs the control command to the machinery installed in the indoor unit are virtually loaded. The machinery installed in the outdoor unit or the indoor unit is, for example, an expansion valve, a fan, and a four-way valve.

That is, since the indoor-unit control part and the outdoor-unit control part are present independently from the indoor unit and the outdoor unit, the configurations of the indoor unit and the outdoor unit are simplified. Moreover, for example, like installation for only communication and actuator functions of components, it is not necessary to load advanced programs into the indoor unit and the outdoor unit, and replacement of the indoor unit and the outdoor unit can be easily performed. In addition, as long as the indoor unit or the outdoor unit satisfies specification, the indoor unit and the outdoor unit manufactured by a maker different from that of the control device may be adopted.

Here, in the related-art air conditioning systems that control the outdoor unit and the indoor unit using the different control devices, respectively, the outdoor unit and the indoor unit are operated by different control programs. Therefore, it is difficult to accurately ascertain the operating state including an anomaly of the overall air conditioning system. For this reason, in the related-art air conditioning systems, it is necessary to collect and manage data, such as the operating state and various state quantities of the air conditioning system, using a server or the like for remote monitoring. Moreover, if the indoor unit and the outdoor unit manufactured by different makers are used for the air conditioning system, it is necessary to determine whether or not the machinery installed in these units is operating correctly as the air conditioning system.

Thus, in the control device of the air conditioning system related to this configuration, the operating state of the air conditioning system is stored for each load state of the air conditioning system by the storage means. The operating state of the air conditioning system is a combination of operating points of respective pieces of the machinery installed in the indoor unit or the outdoor unit, and the state quantities (the temperature, pressure, and the like of the refrigerant) of the air conditioning system. The presence or absence of an anomaly in the machinery is determined by the anomaly determination means by comparing the present operating state with the past operating state associated with the equivalent load state. That is, the control device performs passive monitoring control.

In addition, the equivalent load state means that outdoor air temperature, the number of operating indoor units, or the like is the same or is within an allowable error range even if the number of operating indoor units is different. Additionally, the past operating state may be an own past operating state, for example, may be a past operating state of another air conditioning system with the same configuration of the machinery.

Additionally, in the air conditioning system related to this configuration, one control device controls the indoor unit and the outdoor unit. Thus, the control states of the respective pieces of machinery, the various state quantities in the air conditioning system, and the like can be managed by the control device. That is, in this configuration, the operating state of the air conditioning system can be ascertained simply and accurately without using the server for remote monitoring like the related-art air conditioning systems.

Additionally, in the air conditioning system related to this configuration, even if the indoor unit and the outdoor unit manufactured by different makers are used, the presence or absence of an anomaly is determined by associating the operating points and the state quantities of these pieces of machinery with each other and by comparing the present and past operating states with each other. Thus, it is possible to accurately ascertain the influence that the operation of the machinery has on the air conditioning system.

As described above, in this configuration, the present and past operating states of the air conditioning system in the equivalent load state are compared with each other. Thus, a change in the operating state in a case where an anomaly has occurred in the machinery becomes clear. Therefore, in this configuration, it is possible to more simply and accurately ascertain the operating state of the air conditioning system.

In the above first aspect, the anomaly determination means may determine the presence or absence of an anomaly in the machinery on the basis of predetermined state quantities of the air conditioning system that fluctuate more easily according to the operation of the machinery.

According to this configuration, the presence or absence of an anomaly in the machinery is determined on the basis of the predetermined state quantities that fluctuate more easily according to the operation of the machinery. Thus, the operating state of the air conditioning system can be determined earlier.

In the above first aspect, the amount of a refrigerant within the air conditioning system may be calculated on the basis of a state quantity of the air conditioning system.

According to this configuration, the presence or absence of leakage of the refrigerant can be detected, on the basis of a time change in the flow rate of the refrigerant.

An air conditioning system related to a second aspect of the invention includes one or a plurality of outdoor units; one or a plurality of indoor units; and the control device described in the above.

A method for determining an anomaly of an air conditioning system related to a third aspect of the invention is a method for determining an anomaly of an air conditioning system, defined in claim 5, including one or a plurality of outdoor units and one or a plurality of indoor units, an outdoor-unit control part capable of communication with the outdoor unit through a communication medium, the outdoor-unit control part acquiring, through the communication medium, information about machinery installed in the outdoor unit and outputting a control command to the machinery installed in the outdoor unit, and an indoor-unit control part capable of communication with the indoor unit through the communication medium, the indoor-unit control part acquiring, through the communication medium, information about machinery installed in the indoor unit and outputting a control command to the machinery installed in the indoor unit. The method includes storing an operating state of the air conditioning system for each load state of the air conditioning system; and determining the presence or absence of an anomaly in the machinery by comparing a present operating state and a past operating state associated with an equivalent load state.

### Advantageous Effects of Invention

According to the invention, an excellent effect that the operating state of the air conditioning system can be ascertained more simply and accurately is exhibited.

### Brief Description of Drawings

Fig. 1 is a view illustrating a refrigerant system of an air conditioning system related to an embodiment of the invention.
Fig. 2 is an electrical configuration diagram of the air conditioning system related to the embodiment of the invention.
Fig. 3 is a functional block diagram of an anomaly determination control part related to the embodiment of the invention.
Fig. 4 is a flowchart illustrating a flow of anomaly determination processing related to the embodiment of the invention.
Fig. 5 is a flowchart illustrating a flow of anomaly determination related to the embodiment of the invention.
Fig. 6 is a flowchart illustrating a flow of refrigerant amount determination processing related to the embodiment of the invention.

### Description of Embodiments

Hereinbelow, an embodiment of a control device of the air conditioning system, an air conditioning system, and an anomaly determination method for an air conditioning system related to the invention will be described with reference to the drawings.

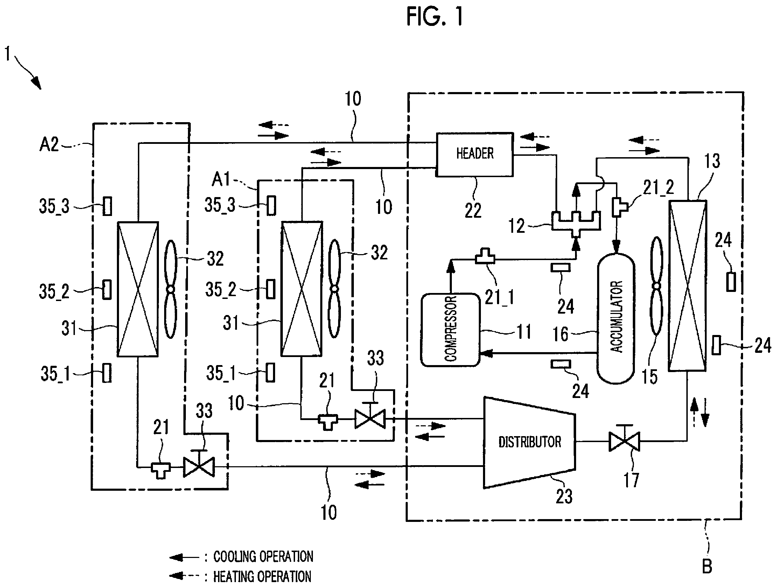

Fig. 1 is a view illustrating a refrigerant system of an air conditioning system 1 related to the present embodiment. As illustrated in Fig. 1, the air conditioning system 1 includes one outdoor unit B, and a plurality of indoor units A1 and A2 connected to the outdoor unit B by a common refrigerant line 10. Although a configuration in which two indoor units A1 and A2 are connected to one outdoor unit B is illustrated for convenience in Fig. 1, the number of outdoor units B to be installed and the number of indoor units A1 and A2 to be connected are not limited.

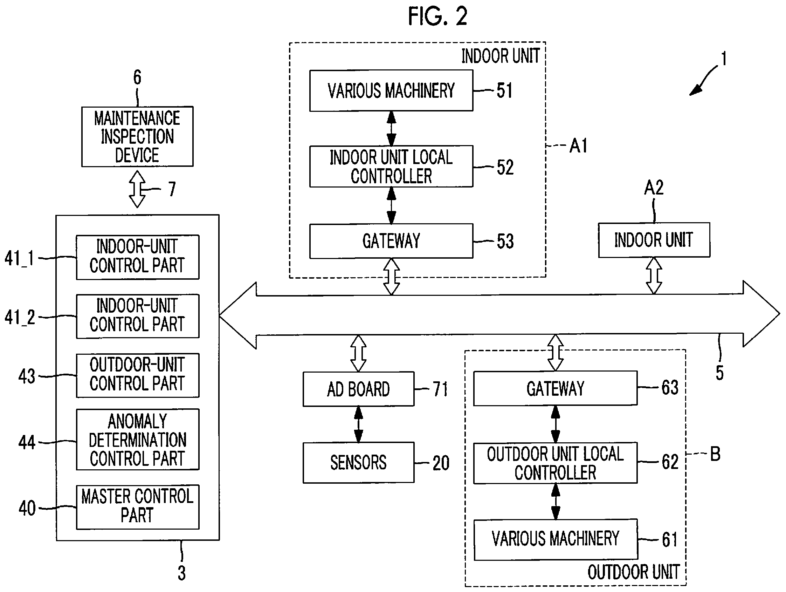

The outdoor unit B includes, for example, a compressor 11 that compresses and delivers a refrigerant, a four-way valve 12 that switches a circulation direction of a refrigerant, an outdoor heat exchanger 13 that performs heat exchange between a refrigerant and ambient air, an outdoor fan 15, an accumulator 16 that is provided on a suction-side pipe of the compressor 11 from the purpose of gas-liquid separation or the like of a refrigerant, an outdoor-unit expansion valve 17 that is, for example, an electronic expansion valve, and the like. Additionally, the outdoor unit B is provided with various sensors 20 (refer to Fig. 2), such as pressure sensors 21 (a high-pressure sensor 21_1 and a low-pressure sensor 21_2) that measure refrigerant pressures, an outdoor temperature sensor 24 that measures refrigerant temperature. In addition, the high-pressure sensor 21_1 measures the pressure of the refrigerant discharged from the compressor 11, and the low-pressure sensor 21_2 measures the pressure of the refrigerant sent to the compressor 11.

The indoor units A1 and A2 include an indoor heat exchanger 31, an indoor fan 32, an indoor-unit expansion valve 33, and the like, respectively. The two indoor units A1 and A2 are respectively connected to respective refrigerant lines 10 that branch at a header 22 and a distributor 23 within the outdoor unit B.

An indoor temperature sensor 35_1 measures the inlet refrigerant temperature of the indoor heat exchanger 31, an indoor temperature sensor 35_2 measures the intermediate refrigerant temperature of the indoor heat exchanger 31, and the indoor temperature sensor 35_3 measures the outlet refrigerant temperature of the indoor heat exchanger 31.

Fig. 2 is an electrical configuration diagram of the air conditioning system 1 related to the present embodiment. As illustrated in Fig. 2, the indoor units A1 and A2, the outdoor unit B, and a control device 3 are connected together through a common bus 5, and are configured to be capable of mutually transferring information. In addition, the common bus 5 is an example of a communication medium, and communication can be wireless or wired.

The control device 3 is connected to a maintenance inspection device 6 that performs maintenance inspection through a communication medium 7, and is configured to be capable of periodically transmitting operating data, or at the time of occurrence of the anomaly, rapidly notifying the maintenance inspection device of the effect.

Here, in related-art air conditioning systems, control devices are provided inside an indoor unit and an outdoor unit, respectively. In contrast, in the present embodiment, respective indoor-unit control parts 41_1 and 41_2 and an outdoor-unit control part 43 are provided independently from the indoor units A1 and A2 and the outdoor unit B. Specifically, the indoor-unit control part 41_1 that controls the indoor unit A1, the indoor-unit control part 41_2 that controls the indoor unit A2, and the outdoor-unit control part 43 that controls the outdoor unit B are mounted on the control device 3 serving as a virtualized control part.

That is, since the indoor-unit control parts 41 and the outdoor-unit control part 43 are present independently from the indoor units A and the outdoor unit B, the configurations of the indoor units A and the outdoor unit B are simplified. Moreover, for example, like installation for only communication and actuator functions of components, it is not necessary to load advanced programs into the indoor units A and the outdoor unit B, and replacement of the indoor units A and the outdoor unit B can be easily performed. In addition, as long as the indoor units A1 and A2 or the outdoor unit B satisfies specification, the indoor units A and the outdoor unit B manufactured by a maker different from that of the control device 3 may be adopted.

That is, the indoor-unit control parts 41_1 and 41_2 and the outdoor-unit control part 43 are integrated in the control device 3 having one kind of hardware, and independent operations are made possible on the hardware included in the control device 3. The control device 3 has a master control part 40 for making the indoor-unit control parts 41_1 and 41_2 and the outdoor-unit control part 43 virtually present within the control device.

In the control device 3, the indoor-unit control parts 41_1 and 41_2 and the outdoor-unit control part 43 are configured to be capable of mutually transferring information. Additionally, the indoor-unit control parts 41_1 and 41_2 and the outdoor-unit control part 43 may perform, for example, autonomous decentralized control for making the individual control parts realize independent autonomous decentralized controls while sharing information. Here, the autonomous decentralized control means that information is received from the sensors 20 and other control parts (for example, the indoor-unit control part 41_2 and the outdoor-unit control part 43 are equivalent to the other control parts in the case of the indoor-unit control part 41_1), and a predetermined application gives control commands to the corresponding indoor units A1 and A2 or outdoor unit B (for example, the indoor unit A1 in the case of the indoor-unit control part 41_1) according to control rules with this information as an input.

In the indoor unit A1, indoor unit local controllers 52 that are respectively provided to correspond to various machinery 51, such as the indoor fan 32 and the indoor-unit expansion valve 33 (refer to Fig. 1), are connected to the common bus 5 through a gateway (communication means) 53. In addition, although illustration is omitted, the indoor unit A2 is also configured to be the same as the indoor unit A1.

In the outdoor unit B, outdoor unit local controllers 62 that are respectively provided to correspond to various machinery 61, such as the compressor 11, the four-way valve 12, and an outdoor fan 13 (refer to Fig. 1), are connected to the common bus 5 through a gateway (communication means) 63.

The gateways 53 and 63 are assemblies of functions including, for example, a communication driver, an address storage region, a machinery attribute storage region, a configuration machinery information storage region, an OS, and a communication framework.

The address storage region is a storage region for storing addresses that are unique identification numbers assigned in order to communicate with the control device 3 or the like.

Additionally, the machinery attribute storage region is a storage region for storing its own attribute information and attribute information about the machinery 51 and 61 to be held. For example, information, such as information about whether there is an indoor unit or an outdoor unit, capacity, installed sensors (for example, a temperature sensor, a pressure sensor, and the like), and information (for example, the number of fan taps, the full pulse of valves, and) about the machinery, is stored.

Moreover, the sensors 20 (for example, the pressure sensors that measure the refrigerant pressures, the temperature sensor that measures the refrigerant temperature, and the like) provided in the indoor units A1 and A2 and the outdoor unit B are respectively connected to the common bus 5 through an AD board 71. Here, in a case where the measurement accuracy of the sensors 20 is low, nodes having a correction function for correcting a measurement value may be provided between the AD board 71 and the sensors 20. In this way, by giving the correction function, it is possible to use sensors, which are inexpensive and are not so high in measurement accuracy, as the sensors 20.

In such an air conditioning system 1, for example, the indoor-unit control parts 41_1 and 41_2 of the control device 3 acquire measurement data and control information acquired from the sensors 20, the indoor unit local controllers 52, and the outdoor unit local controllers 62 through the common bus 5, and executes a predetermined indoor unit control program on the basis of the measurement data, thereby outputting control commands to the various machinery (for example, the indoor fan 32, the indoor-unit expansion valve 33, and the like) provided the indoor units A1 and A2. The control commands are sent to the indoor unit local controllers 52 through the common bus 5 and the gateway 53. The indoor unit local controllers 52 drive the corresponding pieces of machinery, respectively, on the basis of the received control commands. Accordingly, the control of the indoor units A1 and A2 based on the control commands is realized.

Similarly, the outdoor-unit control part 43 of the control device 3 acquires the measurement data and the control information from the sensors 20, the indoor unit local controllers 52, and the outdoor unit local controllers 62 through the common bus 5, and executes a predetermined outdoor unit control program on the basis of these measurement data, thereby outputting control commands to the various machinery (for example, the compressor 11, the four-way valve 12, the outdoor heat exchanger 13, the outdoor fan 15, the outdoor-unit expansion valve 17, and the like) provided in the outdoor unit B. The control commands are sent to the outdoor unit local controllers 62 through the common bus 5 and the gateway 63. The outdoor unit local controllers 62 drive the corresponding pieces of machinery, respectively, on the basis of the received control commands.

The indoor units A1 and A2 and the outdoor unit B may be subjected to the autonomous decentralized control by the indoor-unit control parts 41_1 and 41_2 and the outdoor-unit control part 43, respectively. In this case, the control rules are set between the indoor units A1 and A2 and the outdoor unit B, and the control parts perform control, respectively, according to the control rules. For example, if the refrigerant pressures are mentioned as an example, in a case where the refrigerant pressures acquired from sensors 20 is within a predetermined first allowable fluctuation range, the indoor-unit control parts 41_1 and 41_2 determine control commands for making a user or the like coincide actual temperatures and actual air volumes with set temperatures and set air volumes, and outputs the control commands to the indoor units A1 and A2, respectively, through the common bus 5. Here, the indoor-unit control parts 41_1 and 41_2 may cooperate to perform mutual transfer of information, thereby determining the respective control commands. Additionally, the outdoor-unit control part 43 determines output commands of the air conditioning system 1 for maintaining the refrigerant pressure at a predetermined second allowable fluctuation range, for example, control commands regarding the rotational speed of the compressor 11, the rotating speed of the outdoor fan 15, and the like, and transmits the control commands to the outdoor unit B through the common bus 5.

For example, by setting the first allowable range to be wider than the second allowable range, it is possible for the outdoor-unit control part 43 to ascertain output change information about the indoor units A1 and A2 and determine the behavior of the outdoor unit B.

In addition, the control device 3, the indoor unit local controllers 52, and the outdoor unit local controllers 62 are constituted with, for example, a central processing unit (CPU), a random access memory (RAM), a read only memory (ROM), a computer-readable storage medium, and the like. A series of processing for realizing various functions are stored in the storage medium or the like in the form of a program as an example, and the various functions are realized when the CPU reads this program to the RAM or the like to execute processing of information and calculation processing. In addition, a form in which this program is installed in advance in the ROM or other storage media, a form in which this program is provided after being stored in the computer-readable storage medium, a form in which this program is distributed through communication means in a wired or wireless manner, or the like may be applied. The computer-readable storage medium is a magnetic disk, a magnetic-optical disk, a CD-ROM, a DVD-ROM, a semiconductor memory, or the like.

Here, in the related-art air conditioning systems that control the outdoor unit and the indoor unit using the different control devices, respectively, the outdoor unit and the indoor unit are operated by different control programs. Therefore, it is difficult to accurately ascertain the operating state of the overall air conditioning system. For this reason, in the related-art air conditioning systems, it is necessary to collect and manage data, such as the operating state and various state quantities of the air conditioning system, using a server or the like for remote monitoring.

Additionally, if the indoor units A and the outdoor unit B manufactured by different makers are used for the air conditioning system 1 related to the present embodiment, it is necessary to determine whether or not the machinery installed in these units is operating correctly as the air conditioning system 1.

Thus, the control device 3 of the air conditioning system 1 related to the present embodiment includes an anomaly determination control part 44.

In order to determine the operating state of the air conditioning system 1, the anomaly determination control part 44, compares a present operating state of the air conditioning system 1 with a past operating state associated with an equivalent load state, thereby executes anomaly determination for determining the presence or absence of an anomaly in the machinery. In addition, the present operating state is, in other words, an operating state under operation.

That is, the control device 3 performs passive monitoring control for acquiring the operating state of the air conditioning system 1 that varies according to operated machinery. The operating state is a combination of operating points of respective pieces of the machinery installed in the indoor units A or the outdoor unit B, and the state quantities of the air conditioning system 1. The state quantities are, for example, the temperature of the refrigerant, the pressure of the refrigerant, the flow rate of the refrigerant, the degree of superheat, indoor temperatures, current values of the compressor 11, and the like that are measured by the sensors 20.

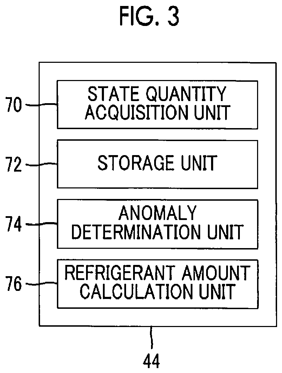

Fig. 3 is a functional block diagram illustrating the functions of the anomaly determination control part 44 in the control device 3 related to the present embodiment.

The anomaly determination control part 44 includes a state quantity acquisition unit 70, a storage unit 72, an anomaly determination unit 74, and a refrigerant amount calculation unit 76.

The state quantity acquisition unit 70 acquires the state quantities of the air conditioning system 1 from the various sensors together with the operating points of the respective pieces of machinery, as the operating state of the air conditioning system 1.

The storage unit 72 stores the operating state acquired by the state quantity acquisition unit 70 in time series and for each load state of the air conditioning system 1.

The anomaly determination unit 74 compares a present operating state stored in the storage unit 72 with a past operating state associated with an equivalent load state, thereby determining the presence or absence of an anomaly in the machinery.

In addition, the equivalent load state means that outdoor air temperature, the number of operating indoor units A, or the like is the same or within an allowable error range even if the number of operating indoor units A is different.

Additionally, the past operating state may be an own past operating state, for example, may be a past operating state of another air conditioning system 1 with the same configuration of the machinery within the same property and the same area. In the case of a form in which comparison with the past operating state of the other air conditioning system 1 is performed, for example, the past operating state of the other air conditioning system 1 is stored in the storage unit 72 through a communication network.

The refrigerant amount calculation unit 76 executes refrigerant amount calculation processing for calculating the amount of the refrigerant within the air conditioning system 1 on the basis of the acquired state quantities.

In this way, in the anomaly determination related to the present embodiment, a change in the operating state in a case where an anomaly has occurred in the machinery becomes clear by comparing the present and past operating states of the air conditioning system 1 in the equivalent load state. Therefore, in the anomaly determination related to the present embodiment, it is possible to more simply and accurately ascertain the operating state of the air conditioning system 1.

Additionally, in the air conditioning system 1 related to the present embodiment, one control device 3 controls the indoor units A and the outdoor unit B. Thus, the control states of the respective pieces of machinery, the various state quantities in the air conditioning system 1, and the like can be managed by the control device 3. That is, in the air conditioning system 1 related to the present embodiment, the operating state of the air conditioning system 1 can be ascertained simply and accurately without using the server for remote monitoring like the related-art air conditioning systems.

Additionally, in the air conditioning system 1 related to the present embodiment, even if the indoor units A and the outdoor unit B manufactured by different makers are used, the presence or absence of an anomaly is determined by associating the operating points and by comparing the state quantities of these pieces of machinery with each other and the present and past operating states with each other. Thus, it is possible to accurately ascertain the influence that the operation of the machinery has on the air conditioning system 1.

Additionally, in the related-art air conditioning systems in which the presence or absence of an anomaly, or the like is monitored remotely, a number of pieces of machinery are installed. Thus, the amount of operating data to be transmitted to the server or the like for remote monitoring is huge, and it is difficult to accurately and rapidly ascertain the state of the air conditioning system and to determine the presence or absence of an anomaly.

Thus, the above-described state quantity acquisition unit 70 acquires a predetermined state quantity that fluctuates more easily according to the operation of the machinery. That is, sensors 20 that acquire state quantities according to machinery of which anomalies are determined are determined in advance.

In this way, in the air conditioning system 1 related to this configuration, the presence or absence of an anomaly in the machinery is determined only on the basis of the predetermined state quantities that fluctuate more easily according to the operation of the machinery. Thus, the operating state of the air conditioning system 1 can be determined earlier.

The following Table 1 is a table showing an example of the combination between machinery of which anomalies are determined and operating states to be compared therewith, in the anomaly determination.

**[Table 1]**

| Machinery | Operating State | Method for Determining Anomaly |
|---|---|---|
| Indoor-Unit Expansion Valve | Opening degree and superheat degree of indoor-unit expansion valve | - During cooling |
| | | Sticking (step-out or the like) |
| | | Opening degree of indoor-unit expansion valve is minimum opening degree, and superheat degree is predetermined temperature or lower Biting of foreign matter |
| | | Present superheat degree is high compared to past superheat degree |
| | | - During heating |
| | | Sticking (step-out or the like) |
| | | Opening degree of indoor-unit expansion valve is maximum opening degree, and supercooling or high pressure is predetermined value or higher |
| | | Biting of foreign matter |
| | | Present supercooling degree (high pressure) is high compared to past supercooling degree (high pressure) |
| Compressor | Rotational speed and current value of compressor | Present current value is different from past current value by predetermined value or higher |
| Four-way Valve | Flow direction of refrigerant | - During cooling |
| | | Value of outdoor temperature sensor 24 > value of indoor temperature sensor 35_3 |
| | | - During heating |
| | | Value of outdoor temperature sensor 24 < value of indoor temperature sensor 35 3 |
| Indoor-Unit Expansion Valve | Opening degree and superheat degree of outdoor-unit expansion valve | - During cooling |
| | | Sticking (step-out or the like) |
| | | Biting of foreign matter |
| | | Present high pressure is high compared to high pressure in past equivalent operation |
| | | - During heating |
| | | Sticking (step-out or the like) |
| | | Opening degree of outdoor-unit expansion valve is minimum opening degree, and superheat degree is predetermined temperature or lower Biting of foreign matter |
| | | Present superheat degree is high compared to past superheat degree |

In a case where machinery of which an anomaly is determined is the indoor-unit expansion valve 33, a present opening degree and a present superheat degree and a past opening degree and a past superheat degree of the indoor-unit expansion valve 33 in an equivalent load state are compared to each other as comparison between the operating states, for example, in the case of a cooling operation. That is, the opening degree of the indoor-unit expansion valve 33 is an operating point of the machinery and the superheat degree is a state quantity. Since it is verified in advance that the indoor-unit expansion valve 33 is operating in a predetermined control area, the anomaly determination for the indoor-unit expansion valve 33 is performed on the basis of the magnitude of the opening degree and its accompanying superheat degree of the indoor-unit expansion valve 33.

In a case where the present opening degree of the indoor-unit expansion valve 33 is different from the past opening degree by a predetermined value or more, it is determined that an anomaly occurs.

Also, in a case where the present opening degree of the indoor-unit expansion valve 33 is a minimum opening degree and the present superheat degree thereof is a predetermined temperature or lower, it is determined that an anomaly (step-out or the like) in which the indoor-unit expansion valve 33 sticks occurs.

Additionally, in a case where the present superheat degree is a predetermined value (for example, 10°C) or high compared to the past superheat degree, it is determined that an anomaly in which the indoor-unit expansion valve 33 is not closed occurs. It is considered that the cause of the anomaly in which the indoor-unit expansion valve 33 is not closed is biting or the like of foreign matter.

On the other hand, in the case of a heating operation, in a case where the opening degree of the indoor-unit expansion valve 33 is a maximum opening degree and supercooling or high pressure is a predetermined value or higher, it is determined that an anomaly (step-out or the like) in which the indoor-unit expansion valve 33 sticks occurs. Additionally, in a case where a present supercooling degree (high pressure) is high compared to the past supercooling degree (high pressure), it determined that an anomaly in which the indoor-unit expansion valve 33 is not closed due to biting or the like of foreign matter occurs.

In a case where machinery of which an anomaly is determined is the compressor 11, a present current value and a past current value with respect to the rotational speed of the compressor 11 in an equivalent load state are compared to each other as the comparison between operating states. That is, the rotational speed of the compressor 11 is an operating point of the machinery, and the current value of the compressor 11 is a state quantity. In this way, the presence or absence of an anomaly of the compressor 11 is directly determined using a current value during the operation of the compressor 11.

Also, in a case where the present current values is different from the past current value by a predetermined value (for example, 2A) or higher, it is determined that an anomaly occurs.

In a case where machinery of which an anomaly is determined is the four-way valve 12, whether or not the four-way valve 12 is functioning normally is determined on the basis of a flow direction of the refrigerant during the cooling operation or the heating operation. That is, the valve position of the four-way valve 12 is an operating point of the machinery.

State quantities acquired in this case are values of any of the indoor temperature sensors 35_1, 35_2, and 35_3 and the outdoor temperature sensor 24. This is because the flow direction during the cooling operation and the flow direction during the heating operation are determined uniquely; therefore determination on whether or not the four-way valve 12 is functioning normally is possible if the temperatures of the indoor units A and the outdoor unit B are acquired. Specifically, if the four-way valve 12 is functioning normally during the cooling operation, the value of the outdoor temperature sensor 24 becomes higher than the value of indoor temperature sensor 35_3 or the like. On the other hand, if the four-way valve 12 is functioning normally during the heating operation, the value of the outdoor temperature sensor 24 becomes lower than the value of indoor temperature sensor 35_3 or the like.

In a case where machinery of which an anomaly is determined is the outdoor-unit expansion valve 17, similar to the indoor-unit expansion valve 33, a present opening degree and a present superheat degree and a past opening degree and a past superheat degree of the outdoor-unit expansion valve 17 in an equivalent load state are compared to each other as the comparison between the operating states, for example, in the case of the heating operation. On the other hand, in the case of cooling operation, the presence or absence of an anomaly, such as sticking (step-out or the like) of the outdoor-unit expansion valve 17 and biting of foreign matter, is determined depending on whether or not a present high pressure is high compared to a past high pressure during an equivalent operation.

In a case where it is determined that an anomaly occurs in the machinery, it is preferable that reduction determination of the amount of the refrigerant is performed by the control device 3.

As the reduction determination of the amount of the refrigerant, during the cooling operation, reduction of the amount of the refrigerant is determined on the basis of the opening degree of the indoor-unit expansion valve 33 and the superheat degree of an evaporator outlet. Specifically, irrespective of an actual superheat degree does not reach a set target superheat degree, it is determined that the amount of the refrigerant is reduced in a case where the indoor-unit expansion valve 33 is fully open. That is, the reason why the indoor-unit expansion valve 33 is fully open is not based on an anomaly of the indoor-unit expansion valve 33, and reduction of the amount of the refrigerant becomes a cause.

Additionally, during the heating operation, reduction of the amount of the refrigerant is determined similar to during the cooling on the basis of the opening degree of the outdoor-unit expansion valve 17 and the superheat degree of the evaporator outlet.

In addition, since gas refrigerant is also reduced if the amount of the refrigerant is reduced, compared to a case where the amount of the refrigerant is not reduced, a drop in the high or low pressure and a drop in the discharge temperature of the compressor 11 occur. Accordingly, although the control device 3 may determine that the amount of the refrigerant is being reduced, the same phenomenon occurs even due to an anomaly of the compressor 11. Therefore, it is more preferable to determine the reduction of the amount of the refrigerant on the basis of the opening degree of the above-described indoor-unit expansion valve 33 and the superheat degree of the evaporator outlet.

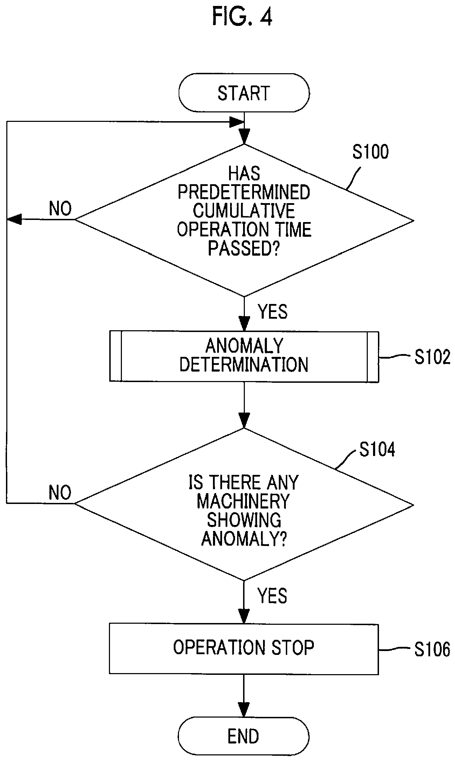

Fig. 4 is a flowchart illustrating a flow of anomaly determination processing (anomaly determination program) related to the present embodiment. The anomaly determination processing is executed by the control device 3.

First, in Step 100, it is determined whether or not a predetermined cumulative operation time (for example, 50 hours) has passed from the end of the anomaly determination processing executed previously. In a case where the determination is positive, the processing proceeds to Step 102.

The anomaly determination is performed in Step 102.

In the next Step 104, it is determined whether or not there is any machinery showing an anomaly depending on the anomaly determination. In a case where the determination is positive, the processing proceeds to Step 106, and in a case where the determination is negative, the processing returns to Step 100.

In Step 106, in order to solve the anomaly, the operation of the air conditioning system 1 is stopped and the anomaly determination processing is ended.

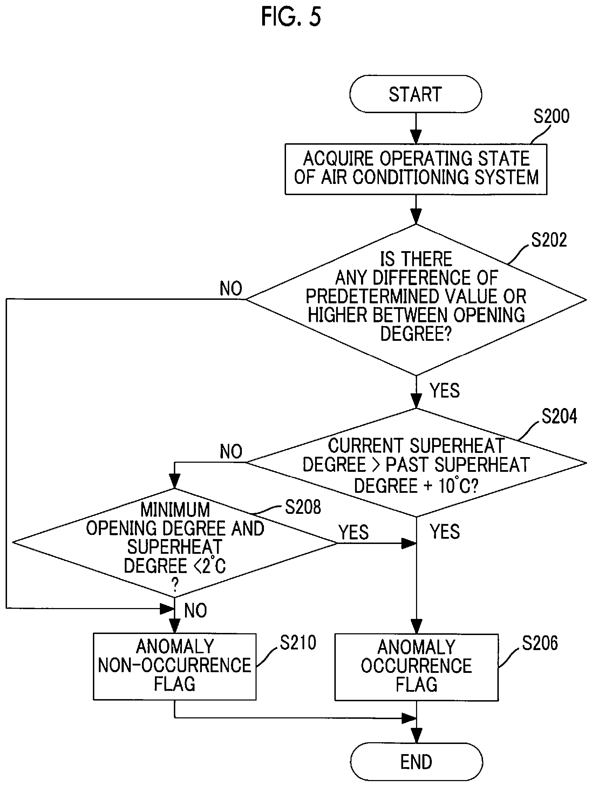

Fig. 5 is a flowchart illustrating an example of the anomaly determination executed in Step 102. In Fig. 5, the presence or absence of an anomaly of the indoor-unit expansion valve 33 is determined as an example.

First, in Step 200, the operating state of the air conditioning system 1 is acquired, and is stored in the storage unit 72 for each load state.

In the next Step 202, it is determined whether or not there is any difference of a predetermined value higher between the present opening degree and the past opening degree of the indoor-unit expansion valve 33 in the equivalent load state. In a case where the determination is positive, the processing proceeds to Step 204, and in a case where the determination is negative, the processing returns to Step 210.

In the next Step 204, it is determined whether or not the present superheat degree is a predetermined value (for example, 10°C) higher than the past superheat degree in the equivalent load state. In a case where the determination is positive, the processing proceeds to Step 206, and in a case where the determination is negative, the processing returns to Step 208.

In Step 206, an anomaly occurrence flag showing that an anomaly occurs in the indoor-unit expansion valve 33 is set.

In Step 208, it is determined whether or not the present opening degree of the indoor-unit expansion valve 33 is a minimum opening degree and the superheat degree is a predetermined temperature (for example, 2°C) or lower that is regarded as being substantially zero. In a case where the determination is positive, the processing proceeds to Step 206, and in a case where the determination is negative, the processing returns to Step 210.

In Step 210, an anomaly non-occurrence flag showing that no anomaly occurs in the indoor-unit expansion valve 33 is set.

Accordingly, in the above-described Step 104, in a case where the anomaly occurrence flag is set, it is determined that there is any machinery showing an anomaly.

By virtue of the anomaly determination described above, an anomaly in the machinery can be detected before a malfunction of the air conditioning system 1, and the anomaly determination at a constant level using data is made possible, not based on determination resulting from a human being's thought.

Additionally, by collecting only the results originating from a malfunction prediction operation and aggregating the verification results of the machinery and data of incompatible sites, statistical data of machinery in which a problem occurs in quality, such as which kind of problem occurs in a combination of any machinery of any maker and any indoor unit of any maker, is obtained. It is also possible to reflect this result on an immediate response to an anomaly or design change.

Additionally, it is possible to classify, for example, the capacity of the indoor units A being insufficient (a selection mistake, performance degradation) with respect to a load generated in an indoor chamber, and the like depending on the operating state. As a result, the range of compensation for incompatibility can be limited.

Next, the refrigerant amount calculation processing executed in the refrigerant amount calculation unit 76 of the control device 3 will be described.

As described above, since the control device 3 controls the indoor units A and the outdoor unit B, the various state quantities and the like in the air conditioning system 1 can be managed.

Thus, in the refrigerant amount calculation processing, the amount of the refrigerant within the air conditioning system 1 is calculated using the state quantities of the refrigerant under the operation of the air conditioning system 1. Accordingly, the state of an increase and a decrease in the amount of the refrigerant can be managed in time series, and the presence or absence of leakage of the refrigerant can be determined.

The refrigerant amount calculation processing related to the present embodiment divides the air conditioning system 1 into a plurality of regions (hereinafter a "divided regions") virtually.

An example of the division are 1. Outdoor heat exchanger 13, 2. Indoor heat exchanger 31, 3. Gas pipe, 4. Liquid pipe, 5. Pressure vessel, and 6. In-machinery line.

The gas pipe is a pipe through which a gas refrigerant that faces from the indoor units A to the outdoor unit B flows, in the refrigerant line 10. The liquid pipe is a line through which a liquid refrigerant that faces from the outdoor unit B to the indoor units A flows, in the refrigerant line 10.

The pressure vessel is the compressor 11 and the accumulator 16.

The in-machinery line is a line that connects the respective pieces of machinery within the indoor units A, and a line that connects the respective pieces of machinery within the outdoor unit B.

The amount of the refrigerant can be calculated, for example, by multiplying the density (kg/m³) of the refrigerant by the internal volume (m³) of the lines.

The refrigerant density is calculated on the basis of the state quantities measured by the pressure sensors and the temperature sensor included in the air conditioning system 1. Additionally, the lengths, internal diameters, and the like of respective lines through that a refrigerant flows are obtained in advance as design values, and the internal volumes of the lines, are calculated from the design values. Also, the amount of the refrigerant is calculated for each divided region, and the total of these amounts is estimated as the amount of the refrigerant circulating through the air conditioning system 1.

Next, a method for calculating the amount of the refrigerant will be described for each divided region taking the case of the cooling operation as an example.

### 1. Outdoor Heat Exchanger 13 (Condenser)

In the outdoor heat exchanger 13, a liquid phase and a gas phase are present in a mixed manner, and the amount of the refrigerant required in the operating state varies greatly depending on a liquid phase region generated inside the outdoor heat exchanger. Thus, the control device 3 stores a map, in which the amount of the refrigerant within the outdoor heat exchanger 13 in the operating state of the air conditioning system 1 is predicted, in advance. In this map, for example, a horizontal axis is high pressure and a vertical axis is the amount of the refrigerant, and a relationship between the high pressure and the amount of the refrigerant according to different supercooling degrees is shown.

That is, in the refrigerant amount calculation processing, the amount of the refrigerant is calculated by reading the amount of the refrigerant according to a measurement value of the high-pressure sensor 21_1 and a supercooling degree from the map.

In addition, the invention is not limited, and the amount of the refrigerant within the outdoor heat exchanger 13 may be calculated by calculating the mean density of the refrigerant within the outdoor heat exchanger 13 on the basis of the pressure and temperature in the outdoor heat exchanger 13, and multiplying the density by a volume within the outdoor heat exchanger 13.

### 2. Indoor Heat Exchanger 31 (Evaporator)

In the indoor heat exchanger 31, the liquid phase and the gas phase are also present in a mixed manner. Thus, similar to the outdoor heat exchanger 13, the control device 3 stores a map, in which the amount of the refrigerant within the indoor heat exchanger 31 in the operating state of the air conditioning system 1 is predicted, in advance. In this map, for example, a horizontal axis is low pressure and a vertical axis is the amount of the refrigerant, and a relationship between the low pressure and the amount of the refrigerant according to superheat degrees is shown.

That is, in the refrigerant amount calculation processing, the amount of the refrigerant is calculated by reading the amount of the refrigerant according to the measurement value of the low-pressure sensor 21_2 and a superheat degree from the map.

In addition, the invention is not limited, and the amount of the refrigerant within the indoor heat exchanger 31 may be calculated by calculating the mean density of the refrigerant within the indoor heat exchanger 31 on the basis of the pressure and temperature in the indoor heat exchanger 31, and multiplying the density by a volume within the indoor heat exchanger 31.

### 3. Gas Pipe

In the refrigerant amount calculation processing, the amount of the refrigerant is calculated by calculating a gas density from the measurement value of the low-pressure sensor 21_2, and the measurement value of the temperature sensor in the gas pipe, and multiplying this gas density by the internal volume of the gas pipe.

### 4. Liquid Pipe

In the refrigerant amount calculation processing, the amount of the refrigerant is calculated by calculating a liquid density from the measurement value of the low-pressure sensor 21_2, and the measurement value of the temperature sensor in the liquid pipe, and multiplying this liquid density by the internal volume of the liquid pipe.

### 5. Pressure Vessel

In the refrigerant amount calculation processing, the amount of the refrigerant is calculated by calculating a gas density from the measurement value of the low-pressure sensor 21_2, and the measurement value of the temperature sensor in the pressure vessel, and multiplying this gas density by the internal volume of the pressure vessel.

In addition, since there is no liquid into the accumulator 16 during the operation of the air conditioning system 1, it can be assumed that a substantially single-phase superheated gas present inside the pressure vessel.

### 6. In-machinery Line

As the in-machinery line, there is a line a pipe (hereinafter referred to as a "liquid line") through which a liquid phase flows, and a line (hereinafter referred to a "gas line") through which a gas phase flows. Thus, in the refrigerant amount calculation processing, the liquid line and the gas line are virtually divided according to the operating state of the air conditioning system 1. In the refrigerant amount calculation processing, the amount of the refrigerant within the liquid line is obtained by multiplying the liquid density calculated from the pressure and temperature in the liquid line by the internal volume of the liquid line, and the amount of the refrigerant within the gas line is obtained by multiplying the gas density calculated from the pressure and temperature in the gas line by the internal volume of the gas line. The sum of the amount of the refrigerant within the liquid line and the amount of the refrigerant within the gas line becomes the amount of the refrigerant in the in-machinery line.

In addition, the amount of the refrigerant is not limited to storing a correlation equation using the control device 3 and being calculated on the basis of this correlation equation, as described above. The control device 3 may be connected to an external server, and the amount of the refrigerant may be calculated in this server.

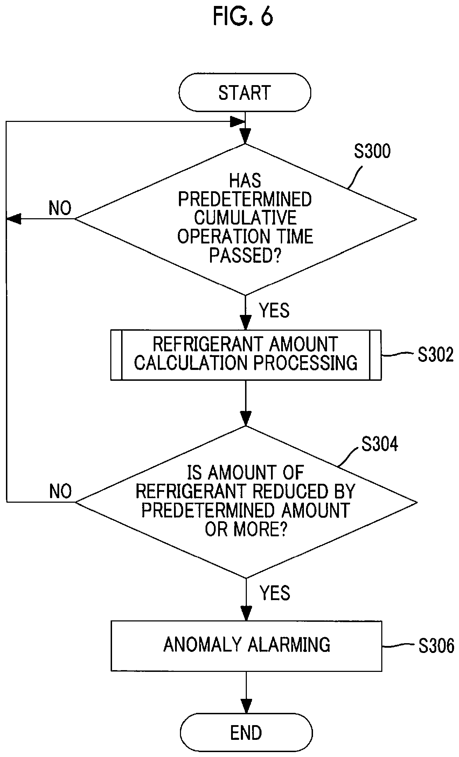

Fig. 6 is a flowchart illustrating a flow of refrigerant amount determination processing related to the present embodiment. The refrigerant amount determination processing is executed by the control device 3.

First, in Step 300, it is determined whether or not a predetermined cumulative operation time (for example, 50 hours) has passed from the end of the refrigerant amount determination processing executed previously. In a case where the determination is positive, the processing proceeds to Step 302.

In Step 302, the above-described refrigerant amount calculation processing is performed, and the calculated amount of the refrigerant is stored.

In the next Step 304, it is determined whether or not the amount of the refrigerant calculated this time is reduced by a predetermined amount or more, compared to the amount of the refrigerant calculated previously. This predetermined amount may be the ratio of the amount of the refrigerant calculated previously to the amount of the refrigerant calculated this time, or may be a difference (absolute value) between the amount of the refrigerant calculated previously and the amount of the refrigerant calculated this time. For example, in a case where the predetermined amount is calculated depending on the ratio and in a case where the amount of the refrigerant previously calculated is reduced by 10% or more compared to the amount of the refrigerant calculated this time, the answer is set to be positive in Step 304 and the processing proceeds to Step 306. On the other hand, in a case where the amount of the reduction is less than 10%, it is determined that the answer is negative, and the processing returns to Step 300.

That is, in a case where the reduction of the amount of the refrigerant is a predetermined amount or more, an anomaly in which the refrigerant leaks out from the air conditioning system 1 occurs.

In Step 306, an alarm showing that the anomaly occurs is activated, for example, through the maintenance inspection device 6, and the refrigerant amount determination processing is ended.

As described above, the control device 3 for the air conditioning system 1 related to the present embodiment includes the outdoor-unit control part 43 capable of communication with the outdoor unit B through the communication medium, the outdoor-unit control part 43 acquiring, through the communication medium, the information about the machinery installed in the outdoor unit B and outputting control commands to the machinery installed in the outdoor unit B; and an indoor-unit control part 41 capable of communication with the indoor units A through the communication medium, the indoor-unit control part 41 acquiring, through the communication medium, the information about the machinery installed in the indoor units A and outputting the control commands to the machinery installed in the indoor units A. The control device 3 stores the operating state of the air conditioning system 1 for each load state of the air conditioning system 1 and determines the presence or absence of an anomaly in the machinery by comparing the present operating state and the past operating state associated with the equivalent load state.

In this way, since, the control device 3 compares the during-operation and past operating states of the air conditioning system 1 in the equivalent load state, a change in the operating state in a case where an anomaly has occurred in the machinery becomes clear, and the operating state of the air conditioning system 1 can be ascertained more simply and accurately.

Although the invention has been described above using the above embodiment, the technical scope of the invention is not limited to the scope described in the above embodiment. Various changes or improvements can be added to the above embodiment without departing from the concept of the invention, and forms to which these changes or improvements are added are also included in the technical scope of the invention. Additionally, the above embodiment may be appropriately combined.

For example, a form in which the anomaly determination processing and the refrigerant amount determination processing are executed after the passage of the predetermined cumulative operation time from the end of each processing executed previously has been described in the above embodiment. However, the invention is not limited to this, and may have a form in which each processing is executed at predetermined time intervals, such as once a week.

Additionally, the flow of the anomaly determination processing or the refrigerant amount determination processing described in the above embodiment is also an example, unnecessary steps may be eliminated, new steps may be added, or processing order may be changed, without departing from the scope of the invention which is defined by the appended claims.

### Reference Signs List

- 1:: AIR CONDITIONING SYSTEM
- 3:: CONTROL DEVICE
- 41:: INDOOR-UNIT CONTROL PART
- 43:: OUTDOOR-UNIT CONTROL PART
- 72:: STORAGE UNIT
- 74:: ANOMALY DETERMINATION UNIT
- A:: INDOOR UNIT
- B:: OUTDOOR UNIT

## Claims

1. A control device (3) for an air conditioning system (1) including one or a plurality of outdoor units (B) and one or a plurality of indoor units (A), the control device (3) comprising:
an outdoor-unit control part (43) provided independently from the outdoor unit (B) and configured to communicate with the outdoor unit (B) through a communication medium (5), the outdoor-unit control part (43) acquiring, through the communication medium (5), information about machinery (61) installed in the outdoor unit (B) and outputting a control command to the machinery (61) installed in the outdoor unit (B);
an indoor-unit control part (41) provided independently from the indoor units (A) and configured to communicate with the indoor unit (A) through the communication medium (5), the indoor-unit control part (41) acquiring, through the communication medium (5), information about machinery (51) installed in the indoor unit (A) and outputting a control command to the machinery (51) installed in the indoor unit (A);
storage means (72) configured to store an operating state of the air conditioning system (1) for each load state of the air conditioning system (1); and
anomaly determination means (44) configured to determine the presence or absence of an anomaly in the machinery (51, 61) by comparing a present operating state and a past operating state associated with an equivalent load state.

2. The control device (3) for an air conditioning system (1) according to Claim 1,
wherein the anomaly determination means (44) comprise a state quantity acquisition unit (70), the anomaly determination means (44) being configured to determine the presence or absence of an anomaly in the machinery (51, 61) on the basis of a predetermined state quantity of the air conditioning system that fluctuates according to the operation of the machinery (51, 61), the state quantity being the temperature of the refrigerant, the pressure of the refrigerant, the flow rate of the refrigerant, the degree of superheat, indoor temperatures or current values of the compressor, the state quantity being acquired by the state quantity acquisition unit (70).

3. The control device (3) for an air conditioning system (1) according to Claim 1 or 2,
wherein the anomaly determination means (44) comprise a refrigerant amount calculation unit (76) configured to calculate the amount of a refrigerant within the air conditioning system (1) on the basis of the state quantity of the air conditioning system (1).

4. An air conditioning system (1) comprising:
one or a plurality of outdoor units (B);
one or a plurality of indoor units (A); and
the control device (3) according to any one of Claims 1 to 3.

5. A method for determining an anomaly of an air conditioning system (1) including one or a plurality of outdoor units (B) and one or a plurality of indoor units (A), an outdoor-unit control part (43) provided independently from the outdoor unit (B) and configured to communicate with the outdoor unit (B) through a communication medium (5), the outdoor-unit control part (43) acquiring, through the communication medium (5), information about machinery (61) installed in the outdoor unit (B) and outputting a control command to the machinery (61) installed in the outdoor unit (B), and an indoor-unit control part (41) provided independently from the indoor units (A) and configured to communicate with the indoor unit (A) through the communication medium (5), the indoor-unit control part (41) acquiring, through the communication medium (5), information about machinery (51) installed in the indoor unit (A) and outputting a control command to the machinery (51) installed in the indoor unit (A), the method comprising:
storing an operating state of the air conditioning system (1) for each load state of the air conditioning system (1); and
determining the presence or absence of an anomaly in the machinery (51, 61) by comparing a present operating state and a past operating state associated with an equivalent load state.

## Patentansprüche

1. Steuervorrichtung (3) für ein Klimatisierungssystem (1), das eine oder eine Vielzahl von Außeneinheiten (B) und eine oder eine Vielzahl von Inneneinheiten (A) beinhaltet, wobei die Steuervorrichtung (3) Folgendes umfasst:
ein Außeneinheitsteuerteil (43), das unabhängig von der Außeneinheit (B) bereitgestellt und dazu ausgelegt ist, über ein Kommunikationsmedium (5) mit der Außeneinheit (B) zu kommunizieren, wobei das Außeneinheitsteuerteil (43) über das Kommunikationsmedium (5) Informationen über eine Maschinenanlage (61), die in der Außeneinheit (B) installiert ist, erfasst und einen Steuerbefehl an die Maschinenanlage (61), die in der Außeneinheit (B) installiert ist, ausgibt;
ein Inneneinheitsteuerteil (41), das unabhängig von den Inneneinheiten (A) bereitgestellt und dazu ausgelegt ist, über das Kommunikationsmedium (5) mit der Inneneinheit (A) zu kommunizieren, wobei das Inneneinheitsteuerteil (41) über das Kommunikationsmedium (5) Informationen über eine Maschinenanlage (51), die in der Inneneinheit (A) installiert ist, erfasst und einen Steuerbefehl an die Maschinenanlage (51), die in der Inneneinheit (A) installiert ist, ausgibt;
ein Speichermittel (72), das dazu ausgelegt ist, für jeden Lastzustand des Klimatisierungssystems (1) einen Betriebszustand des Klimatisierungssystems (1) zu speichern; und
ein Anomaliebestimmungsmittel (44), das dazu ausgelegt ist, durch Vergleichen eines gegenwärtigen Betriebszustands und eines vergangenen Betriebszustands, der mit einem äquivalenten Lastzustand verknüpft ist, das Vorhandensein oder das Fehlen einer Anomalie in der Maschinenanlage (51, 61) zu bestimmen.

2. Steuervorrichtung (3) für ein Klimatisierungssystem (1) nach Anspruch 1,
wobei das Anomaliebestimmungsmittel (44) eine Zustandsquantitätserfassungseinheit (70) umfasst, wobei das Anomaliebestimmungsmittel (44) dazu ausgelegt ist, auf Basis einer vorbestimmten Zustandsquantität des Klimatisierungssystems, die gemäß dem Betrieb der Maschinenanlage (51, 61) schwankt, das Vorhandensein oder das Fehlen einer Anomalie in der Maschinenanlage (51, 61) zu bestimmen, wobei die Zustandsquantität die Temperatur des Kältemittels, der Druck des Kältemittels, die Durchflussrate des Kältemittels, der Grad der Überhitzung, Innentemperaturen oder aktuelle Werte des Verdichters ist, wobei die Zustandsquantität von der Zustandsquantitätserfassungseinheit (70) erfasst wird.

3. Steuervorrichtung (3) für ein Klimatisierungssystem (1) nach Anspruch 1 oder 2,
wobei das Anomaliebestimmungsmittel (44) eine Kältemittelmengenberechnungseinheit (76) umfasst, die dazu ausgelegt ist, die Menge eines Kältemittels im Klimatisierungssystem (1) auf Basis der Zustandsquantität des Klimatisierungssystems (1) zu berechnen.

4. Klimatisierungssystem (1), das Folgendes umfasst:
eine oder eine Vielzahl von Außeneinheiten (B);
eine oder eine Vielzahl von Inneneinheiten (A); und
die Steuervorrichtung (3) nach einem der Ansprüche 1 bis 3.

5. Verfahren zum Bestimmen einer Anomalie eines Klimatisierungssystems (1), das eine oder eine Vielzahl von Außeneinheiten (B) und eine oder eine Vielzahl von Inneneinheiten (A), ein Außeneinheitsteuerteil (43), das unabhängig von der Außeneinheit (B) bereitgestellt und dazu ausgelegt ist, über ein Kommunikationsmedium (5) mit der Außeneinheit (B) zu kommunizieren, wobei das Außeneinheitsteuerteil (43) über das Kommunikationsmedium (5) Informationen über eine Maschinenanlage (61), die in der Außeneinheit (B) installiert ist, erfasst und einen Steuerbefehl an die Maschinenanlage (61), die in der Außeneinheit (B) installiert ist ausgibt, und ein Inneneinheitsteuerteil (41), das unabhängig von den Inneneinheiten (A) bereitgestellt und dazu ausgelegt ist, über das Kommunikationsmedium (5) mit der Inneneinheit (A) zu kommunizieren, beinhaltet, wobei das Inneneinheitsteuerteil (41) über das Kommunikationsmedium (5) Informationen über eine Maschinenanlage (51), die in der Inneneinheit (A) installiert ist, erfasst und einen Steuerbefehl an die Maschinenanlage (51), die in der Inneneinheit (A) installiert ist, ausgibt, wobei das Verfahren Folgendes umfasst:
Speichern eines Betriebszustands des Klimatisierungssystems (1) für jeden Lastzustand des Klimatisierungssystems (1); und
Bestimmen des Vorhandenseins oder des Fehlens einer Anomalie in der Maschinenanlage (51, 61) durch Vergleichen eines gegenwärtigen Betriebszustands und eines vergangenen Betriebszustands, der mit einem äquivalenten Lastzustand verknüpft ist.

## Revendications

1. Dispositif de commande (3) pour un système de climatisation (1) comportant une ou plusieurs unités en extérieur (B) et une ou plusieurs unités en intérieur (A), le dispositif de commande (3) comprenant :
une partie de commande d'unité en extérieur (43) prévue indépendamment de l'unité en extérieur (B) et configurée pour communiquer avec l'unité en extérieur (B) par l'intermédiaire d'un support de communication (5), la partie de commande d'unité en extérieur (43) acquérant, par l'intermédiaire du support de communication (5), des informations sur la machinerie (61) installée dans l'unité en extérieur (B), et délivrant une instruction de commande à la machinerie (61) installée dans l'unité en extérieur (B) ;
une partie de commande d'unité en intérieur (41) prévue indépendamment des unités en intérieur (A) et configurée pour communiquer avec l'unité en intérieur (A) par l'intermédiaire du support de communication (5), la partie de commande d'unité en intérieur (41) acquérant, par l'intermédiaire du support de communication (5), des informations sur la machinerie (51) installée dans l'unité en intérieur (A) et délivrant une instruction de commande à la machinerie (51) installée dans l'unité en intérieur (A) ;
des moyens de stockage (72) configurés pour stocker un état de fonctionnement du système de climatisation (1) pour chaque état de charge du système de climatisation (1) ; et
des moyens de détermination d'anomalies (44) configurés pour déterminer la présence ou l'absence d'une anomalie dans la machinerie (51, 61) en comparant un état de fonctionnement actuel et un état de fonctionnement passé associé à un état de charge équivalent.

2. Dispositif de commande (3) pour un système de climatisation (1) selon la revendication 1,
dans lequel les moyens de détermination d'anomalies (44) comprennent une unité d'acquisition de quantité d'état (70), les moyens de détermination d'anomalies (44) étant configurés pour déterminer la présence ou l'absence d'une anomalie dans la machinerie (51, 61) sur la base d'une quantité d'état prédéterminée du système de climatisation qui fluctue selon le fonctionnement de la machinerie (51, 61), la quantité d'état étant la température du réfrigérant, la pression du réfrigérant, le débit du réfrigérant, le degré de surchauffe, les températures en intérieur ou les valeurs actuelles du compresseur, la quantité d'état étant acquise par l'unité d'acquisition de quantité d'état (70).

3. Dispositif de commande (3) pour un système de climatisation (1) selon la revendication 1 ou 2,
dans lequel les moyens de détermination d'anomalies (44) comprennent une unité de calcul de quantité de réfrigérant (76) configurée pour calculer la quantité d'un réfrigérant dans le système de climatisation (1) sur la base de la quantité d'état du système de climatisation (1).

4. Système de climatisation (1) comprenant :
une ou plusieurs unités en extérieur (B) ;
une ou plusieurs unités en intérieur (A) ; et
le dispositif de commande (3) selon l'une quelconque des revendications 1 à 3.

5. Procédé pour déterminer une anomalie d'un système de climatisation (1) comportant une ou plusieurs unités en extérieur (B) et une ou plusieurs unités en intérieur (A), une partie de commande d'unité en extérieur (43) prévue indépendamment de l'unité en extérieur (B) et configurée pour communiquer avec l'unité en extérieur (B) par l'intermédiaire d'un support de communication (5), la partie de commande d'unité en extérieur (43) acquérant, par l'intermédiaire du support de communication (5), des informations sur la machinerie (61) installée dans l'unité en extérieur (B) et délivrant une instruction de commande à la machinerie (61) installée dans l'unité en extérieur (B), et une partie de commande d'unité en intérieur (41) prévue indépendamment des unités en intérieur (A) et configurée pour communiquer avec l'unité en intérieur (A) par l'intermédiaire du support de communication (5), la partie de commande d'unité en intérieur (41) acquérant, par l'intermédiaire du support de communication (5), des informations sur la machinerie (51) installée dans l'unité en intérieur (A) et délivrant une instruction de commande à la machinerie (51) installée dans l'unité en intérieur (A), le procédé comprenant les étapes suivantes :
stocker un état de fonctionnement du système de climatisation (1) pour chaque état de charge du système de climatisation (1) ; et
déterminer la présence ou l'absence d'une anomalie dans la machinerie (51, 61) en comparant un état de fonctionnement actuel et un état de fonctionnement passé associé à un état de charge équivalent.
